(19) **Europäisches Patentamt**
**European Patent Office**
**Office européen des brevets**

(11) **EP 1 137 024 A1**

(12) **EUROPÄISCHE PATENTANMELDUNG**

(43) Veröffentlichungstag:
**26.09.2001 Patentblatt 2001/39**

(51) Int Cl.⁷: **H01H 9/16**, H02J 13/00

(21) Anmeldenummer: **00810256.8**

(22) Anmeldetag: **24.03.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **ABB Power Automation AG**
**5401 Baden (CH)**

(72) Erfinder: **Bieser, Stefan**
**79771 Klettgau (DE)**

(74) Vertreter: **ABB Patent Attorneys**
**c/o ABB Business Services Ltd. (SLE-I)**
**Haselstrasse 16/699**
**5401 Baden (CH)**

(54) **Auswertung einer codierten Schalterstellung**

(57) Eine Überwachung einer Schalterstellung eines Schalters (1), der mit einer Hilfsspannungsquelle (2) verbunden ist, geschieht mittels eines Codierers (3), eines Übertragungsmittels (4) und eines Decodierers (5). Dabei versorgt bei geschlossenem Schalter (1) eine Hilfsspannung $U_0$ der Hilfsspannungsquelle (2) den Codierer (3) mit Energie. Der Codierer (3) erzeugt dann eine pulsdauermodulierte Impulsfolge mit einer Einschaltdauer, welche eine Funktion der Hilfsspannung $U_0$ ist. Der Decodierer (5) zur Auswertung der pulsdauermodulierten Impulsfolge und zur Bestimmung eines rekonstruierten Wertes der Hilfsspannung $U_0$ ist in einem speziell für die Decodierung ausgebildeten Baustein, vorzugsweise in einem ASIC implementiert.

Der Decodierer weist

a) einen Signalerfasser (51) zur Abtastung der Impulsfolge und zur Bestimmung von Zeitpunkten, zu denen Zustandswechsel detektiert wurden,
b) einen Ringspeicher (52) zur Speicherung dieser Zeitpunkte, und
c) einen Verarbeiter (53) zur Bestimmung der Einschaltdauer der Impulsfolge und eines rekonstruierten Wertes der Hilfsspannung $U_0$ auf.

In einer bevorzugten Variante der Erfindung wird im Decodierer (5) auch ein Einschaltzeitpunkt des Schalters (1) bestimmt, was beispielsweise für Steuer- und Schutzverfahren einer Schaltanlage von Bedeutung ist.

**Fig. 1**

## Beschreibung

## Technisches Gebiet

Die Erfindung bezieht sich auf das Gebiet der Schutztechnik und der Stationsleittechnik. Sie bezieht sich auf eine Vorrichtung und ein Verfahren zur Überwachung einer Schalterstellung gemäss dem Oberbegriff der Patentansprüche 1 und 8.

## Stand der Technik

In der EP 0 631 360 B1 respektive der US 5 585 678 ist eine Vorrichtung zur Überwachung einer Schalterstellung beschrieben. Der Inhalt der EP 0 631 360 B1 wird hiermit in diese Anmeldung aufgenommen. Vorrichtungen zur Überwachung einer Schalterstellung werden beispielsweise für Hoch- und Mittelspannungsschaltanlagen verwendet.

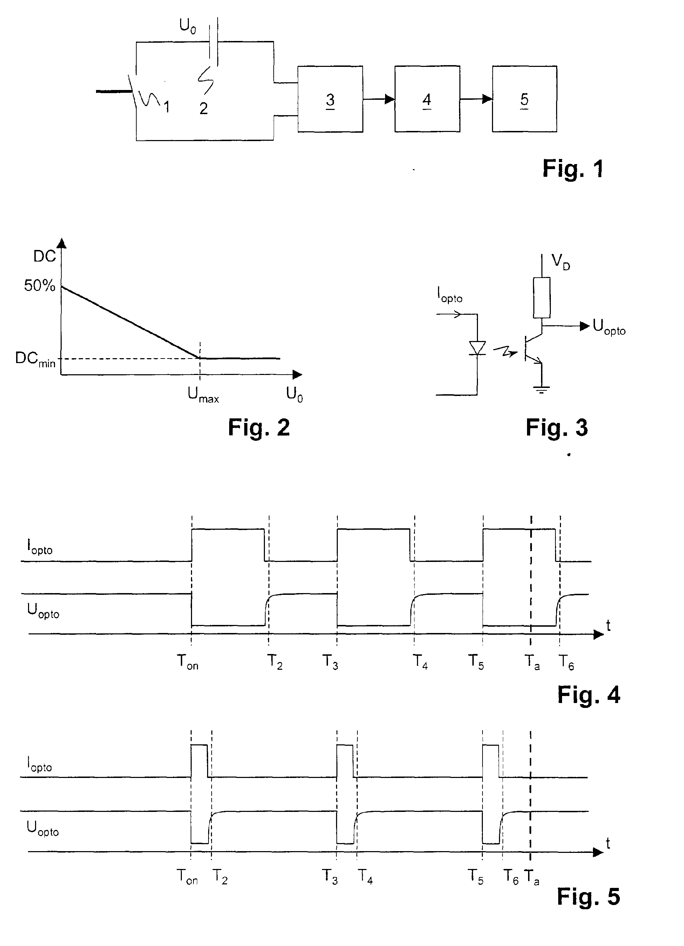

Figur 1 zeigt schematisch eine solche Vorrichtung gemäss dem Stand der Technik. Die Vorrichtung weist einen Schalter 1 auf, der über eine Hilfsspannungsquelle 2 mit einem Codierer 3 verbunden ist. Der Codierer 3 ist über ein Übertragungsmittel 4 mit einem Decodierer 5 verbunden. Die Vorrichtung hat die Aufgabe, die Stellung des Schalters 1 zu detektieren und eine Höhe $U_0$ der Hilfsspannung zu bestimmen, wobei der Codierer 3 und der Decodierer 5 durch das Übertragungsmittel 4 galvanisch getrennt sind. Dabei wird, falls der Schalter 1 geschlossen ist, der Codierer 3 durch die Hilfsspannungsquelle 2 mit elektrischer Energie versorgt und funktioniert unabhängig von der Höhe der Hilfsspannung $U_0$. Dadurch kann die Vorrichtung ohne Anpassung an die Hilfsspannung $U_0$ eingesetzt werden.

Bei geschlossenem Schalter 1 erzeugt der Codierer 3 eine pulsdauermodulierte Impulsfolge mit einer bestimmten Einschaltdauer, wobei die Einschaltdauer eine Funktion der Hilfsspannung $U_0$ ist. Figur 2 zeigt eine Einschaltdauer DC eines pulsdauermodulierten Signals in Abhängigkeit der Hilfsspannung $U_0$. Für einen beliebig kleinen Wert der Hilfsspannung $U_0$ beträgt die Einschaltdauer 50%. Für grösser werdende Werte der Hilfsspannung $U_0$ nimmt die Einschaltdauer ab, unterschreitet jedoch nicht eine vorgegebene minimale Einschaltdauer. Ein Vorhandensein des pulsdauermodulierten Signals bedeutet also, dass der Schalter 1 geschlossen ist, die Einschaltdauer gibt den Wert der Hilfsspannung $U_0$ an.

Eine Auswertung des pulsdauermodulierten Signals kann, wie in der EP 0 631 360 B1 erwähnt, mit einem Mikroprozessor geschehen. Da übliche Mikroprozessoren nicht die erforderliche Leistungsfähigkeit aufweisen, werden spezielle Mikroprozessoren benötigt. Diese müssen aufwendig programmiert werden. Da die Auswahl an solchen Mikroprozessoren klein ist, müssen Nachteile solcher Mikroprozessoren in Kauf genommen werden, beispielsweise ein begrenzter Befehlsumfang oder eine eingeschränkte Leistungsfähigkeit in anderen Bereichen. Bei einem Wechsel des Mikroprozessors muss die Programmierung an den neuen Mikroprozessor angepasst werden. Insgesamt ist eine solche Lösung also aufwendig und inflexibel.

## Darstellung der Erfindung

Es ist deshalb Aufgabe der Erfindung, eine Vorrichtung und ein Verfahren zur Überwachung einer Schalterstellung der eingangs genannten Art zu schaffen, welche die oben genannten Nachteile behebt.

Diese Aufgabe lösen eine Vorrichtung und ein Verfahren zur Überwachung einer Schalterstellung mit den Merkmalen der Patentansprüche 1 und 8.

Die erfindungsgemässe Vorrichtung dient zur Überwachung einer Schalterstellung eines Schalters, der mit einer Hilfsspannungsquelle verbunden ist, wobei die Vorrichtung einen Codierer, ein Übertragungsmittel und einen Decodierer aufweist, und bei geschlossenem Schalter eine Hilfsspannung $U_0$ der Hilfsspannungsquelle am Codierer anliegt und den Codierer mit Energie versorgt, der Codierer zur Erzeugung einer pulsdauermodulierten Impulsfolge ausgebildet ist, wobei eine Einschaltdauer der Impulsfolge eine Funktion der Hilfsspannung $U_0$ ist, und wobei der Decodierer zur Auswertung der pulsdauermodulierten Impulsfolge und zur Bestimmung eines rekonstruierten Wertes der Hilfsspannung $U_0$ in einem speziell für die Decodierung ausgebildeten Baustein implementiert ist.

Dadurch wird es möglich, die Decodierung unabhängig von einem Mikroprozessor durchzuführen, wodurch ein solcher Mikroprozessor, welcher beispielsweise den rekonstruierten Spannungswert weiter verarbeitet, entlastet wird. Auch kann ein Mikroprozessor gegebenenfalls durch ein neueres Modell ersetzt werden, ohne dass eine aufwendige Neuprogrammierung der zeitkritischen Decodierung notwendig ist.

In einer bevorzugten Ausführungsform der Erfindung ist der Decodierer in einem ASIC (Application Specific Integrated Circuit) implementiert.

In einer weiteren bevorzugten Ausführungsform der Erfindung weist der Decodierer zur Auswertung der pulsdauermodulierten Impulsfolge und zur Bestimmung eines rekonstruierten Wertes der Hilfsspannung $U_0$

a) einen Signalerfasser zur Abtastung der Impulsfolge, zur Detektion von Zustandswechseln der Impulsfolge und zur Bestimmung von Zeitpunkten, zu denen Zustandswechsel detektiert wurden,
b) einen Ringspeicher zur Speicherung dieser Zeitpunkte von Zustandswechseln,
c) einen Verarbeiter zur Bestimmung der Einschaltdauer der Impulsfolge und zur Bestimmung eines rekonstruierten Wertes der Hilfsspannung $U_0$ auf.

In einer bevorzugten Variante der Erfindung wird im Decodierer der Zeitpunkt bestimmt, zu dem eine erster Impuls einer Impulsfolge nach dem Einschalten des Schalters empfangen worden ist. Dies erlaubt, den Einschaltzeitpunkt des Schalters genau zu bestimmen, was beispielsweise für Steuer- und Schutzverfahren einer Schaltanlage von Bedeutung ist.

In einer weiteren bevorzugten Variante der Erfindung verarbeitet der in einem ASIC implementierte Decodierer mehrere, beispielsweise 16 oder 24 oder mehr Signale respektive Impulsfolgen. Dabei werden die einzelnen Signale zyklisch abgetastet und verarbeitet, so dass die gleiche Hardware des ASICs reihum zur Verarbeitung der mehreren Signale verwendet wird.

Weitere bevorzugte Ausführungsformen gehen aus den abhängigen Patentansprüchen hervor.

**Kurze Beschreibung der Zeichnungen**

Im folgenden wird die Erfindung anhand bevorzugter Ausführungsbeispiele, welche in den beiliegenden Zeichnungen dargestellt sind, näher erläutert. Es zeigen:

Figur 1 schematisch eine Vorrichtung zur Überwachung einer Schalterstellung;

Figur 2 eine Einschaltdauer eines pulsdauermodulierten Signals in Abhängigkeit einer Hilfsspannung;

Figur 3 eine Optokopplerschaltung als Übertragungsmittel;

Figur 4 einen ersten zeitlichen Verlauf pulsdauermodulierter Signale;

Figur 5 einen zweiten zeitlichen Verlauf pulsdauermodulierter Signale;

Figur 6 schematisch einen erfindungsgemässen Decodierer;

Figur 7 ein Flussdiagramm eines Arbeitsablaufs eines Signalerfassers; und

Figur 8 ein Flussdiagramm eines Arbeitsablaufs eines Verarbeiters.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

**Wege zur Ausführung der Erfindung**

Figur 1 zeigt ein Blockschaltbild einer erfindungsgemässen Überwachungsvorrichtung. Ein Schalter 1 ist beispielsweise ein Hilfsschalter eines Hochspannungsschalters. Dieser Hilfsschalter ist mechanisch mit dem Hochspannungsschalter gekoppelt, so dass aus der Stellung des Hilfsschalters in einfacher Weise auf die Stellung des Hochspannungsschalters geschlossen werden kann. Solche Hilfsschalter sind von grosser Bedeutung, ermöglichen sie doch die Überwachung eines Hochspannungsschalters auf kleinem Leistungsniveau.

Zur Überwachung der Schalterstellung des Schalters 1 ist dieser mit einer Hilfsspannungsquelle 2 verbunden, welche bei geschlossenem Schalter eine Hilfsspannung $U_0$ abgibt. Mit dem Schalter 1 und der Hilfsspannungsquelle ist ein Codierer 3 verbunden. Dieser Codierer 3 detektiert die Schalterstellung des Schalters 1 und wandelt die anhaftende binäre Information in ein elektrisches Signal um.

Dieses elektrische Signal wird vom Übertragungsmittel 4 auf eine vorzugsweise galvanisch getrennte Sekundärseite übertragen. Auf dieser Sekundärseite wird das übertragene elektrische Signal durch einen Decodierer 5 ausgewertet. Die Übertragung erfolgt vorzugsweise mittels Optokopplern. Andere galvanisch getrennte Übertragungsarten sind jedoch auch denkbar.

Da nun aber Schaltanlagen von Fall zu Fall verschiedene Hilfsspannungen aufweisen, müssen normalerweise die Überwachungseinrichtungen von Hand und vor Ort an die vorhandene Hilfsspannung angepasst werden. Andernfalls würden für verschiedene Spannungen unterschiedliche Ansteuerströme des Optokopplers resultieren. Die Überwachungseinrichtung ermöglicht, wie in der EP 0 631 360 B1 beschrieben, dass für verschiedene Hilfsspannungen ein einziger Schaltungstyp verwendet werden kann, ohne dass dieser noch angepasst werden muss.

Dies wird dadurch erreicht, dass die Hilfsspannung $U_0$, welche bei geschlossenem Schalter am Eingang des Codierers 3 liegt, in eine pulsdauermodulierte Impulsfolge umgewandelt wird, deren Einschaltdauer nach Massgabe der Höhe der Hilfsspannung $U_0$ gebildet wird. Damit ist gewährleistet, dass das Übertragungsmittel 4 mit einer im wesentlichen hilfsspannungsunabhängigen Leistung angesteuert werden. Eine Anpassung der Schaltung an die Hilfsspannungsquelle 2 entfällt damit ganz. Weiter kann die Codierung der Hilfsspannung in eine Pulsdauermodulation im Decodierer 5 rückgängig gemacht, d.h. decodiert werden. Damit erhält man nicht nur eine hilfsspannungsunabhängige Übertragung der Schalterstellung des Schalters 2, sondern gleichzeitig auch noch eine Information über die Höhe der Hilfsspannung.

Üblicherweise werden Hilfsspannungen von 24 V bis 250 V verwendet. Diese Spannung weist im schlechtesten Fall ein Toleranz von ±25% auf, so dass mit Spannungen von 18 V bis 312 V gerechnet werden muss.

Figur 2 zeigt eine Möglichkeit, die Hilfsspannung $U_0$ als Einschaltdauer eines pulsdauermodulierten Signals zu codieren. Dabei ist entlang der Ordinate die Einschaltdauer DC (Duty-Cycle) in Prozenten, und entlang der Abszisse der Wert der Hilfsspannung $U_0$ aufgetragen. Für minimale Werte der Hilfsspannung $U_0$ beträgt die Einschaltdauer 50%, für zunehmende Werte der Hilfsspannung $U_0$ nimmt die Einschaltdauer ab, bis sie bei einer maximalen Spannung $U_{max}$ nach unten auf

einen minimalen Wert $DC_{min}$ begrenzt wird.

Figur 3 zeigt eine Optokopplerschaltung als Übertragungsmittel. Der Ausgang des Optokopplers wird durch einen Anschluss eines Fototransistors gebildet. Eine Ausgangsspannung $U_{opto}$ des Optokopplers wird im nichtleitenden Zustand des Fototransistors über einen Widerstand R auf eine Versorgungsspannung $V_D$ gezogen wird. Wird der Eingang des Optokopplers durch einen Strom $I_{opto}$ angesteuert, so wird die Ausgangsspannung $U_{opto}$ auf Erdpotential gezogen. Im Zusammenhang mit einer Codierung des pulsdauermodulierten Stromsignales $I_{opto}$ gemäss Figur 2 ergibt sich, dass bei Vorliegen einer Pulsfolge die Pulsdauer der Optokoppler-Ausgangsspannung $U_{opto}$ proportional zur Hilfsspannung $U_0$ ist.

Figur 4 zeigt einen ersten zeitlichen Verlauf eines derart pulsdauermodulierten Stromsignales $I_{opto}$, mit welchem ein Optokoppler gemäss Figur 3 angesteuert wird. Wenn das Stromsignal $I_{opto}$ gemäss der Codierung von Figur 2 gebildet wird, so entspricht der Verlauf von $I_{opto}$, da er eine Einschaltdauer von ca. 50% aufweist, einer minimalen Hilfsspannung $U_0$. Entsprechend dem Stromsignal $I_{opto}$ entsteht ein Spannungssignal $U_{opto}$ mit dem gezeigten Verlauf. Ein Zeitpunkt $T_{on}$ bezeichnet einen Einschaltzeitpunkt oder den Zeitpunkt des Schliessens des Schalters 1, bei welchem die Erzeugung der Impulsfolge beginnt und insbesondere eine erste Signalflanke erzeugt wird. Zeitpunkte T2-T6 bezeichnen weitere Zeitpunkte, zu denen Zustandswechsel der Signale resp. Signalflanken detektiert werden.

Figur 5 zeigt einen zweiten zeitlichen Verlauf eines Stromsignals $I_{opto}$ und eines entsprechenden Spannungssignals $U_{opto}$ für einen maximalen Wert $U_{max}$ der Hilfsspannung. Dabei ist die Einschaltdauer DC gleich der minimalen Einschaltdauer $DC_{min}$.

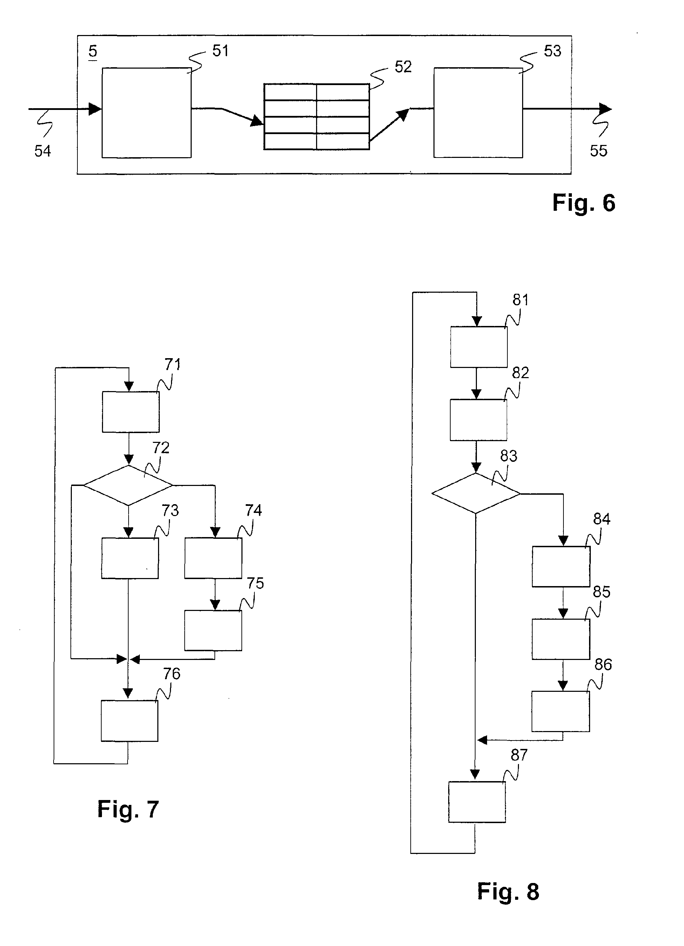

Figur 6 zeigt schematisch einen erfindungsgemässen Decodierer 5. Der Decodierer 5 weist einen Signalerfasser 51 mit einem Signaleingang 54, einen Ringspeicher 52 und einen Verarbeiter 53 mit Ausgangswerten 55 auf. Der Signalerfasser 51 dient zur Abtastung der pulsdauermodulierten Impulsfolge, zur Detektion von Zustandswechseln der Impulsfolge und zur Bestimmung von Zeitpunkten, zu denen Zustandswechsel detektiert wurden. Der Ringspeicher 52 dient zur Speicherung dieser Zeitpunkte von Zustandswechseln. Dazu ist je ein Paar aufeinanderfolgender Zustandswechsel einer Position des Ringspeichers 52 zugeordnet. Es ist also beispielsweise eine steigende Flanke einem ersten Register einer bestimmten Position des Ringspeichers 52 und eine fallende Flanke einem zweiten Register derselben Position zugeordnet. Ein Ringzähler speichert eine aktuelle Position des Ringspeichers 52. Der Ringspeicher weist vorteilhafterweise vier Positionen auf. Damit kann ein zwei-bit-Zähler als Ringzähler verwendet werden. Der Verarbeiter 53 dient zur Bestimmung der Einschaltdauer der Impulsfolge und zur Bestimmung eines rekonstruierten Wertes der Hilfsspannung $U_0$.

Der Decodierer 5 funktioniert wie folgt: Der Signalerfasser 51 tastet die am Signaleingang 54 vorliegende Impulsfolge, beispielsweise die Optokoppler-Ausgangsspannung $U_{opto}$ ab. Der Signalerfasser 51 detektiert Zustandswechsel, also fallende und steigende Flanken der Impulsfolge, sowie Zeitpunkte T2-T6, zu denen diese Zustandswechsel stattfinden respektive detektiert werden. Diese Zeitpunkte werden in den Ringspeicher 52 geschrieben. Wird eine steigende oder eine fallende Flanke detektiert, so wird in ein entsprechendes Register einer Position des Ringspeichers 52 geschrieben, welche auf die aktuelle Position des Ringspeichers 52 folgt. Nur wenn eine fallende Flanke detektiert wird, wird die aktuelle Position des Ringspeichers 52 gleich der Position gesetzt, welche auf die aktuelle Position folgt. Dadurch enthält die aktuelle Position immer den Zeitpunkt der zuletzt ermittelten fallenden Flanke. Eine zeitliche Auflösung der Beschreibung der Zeitpunkte T2-T6 beträgt beispielsweise ca. eine Mikrosekunde.

Der Verarbeiter 53 liest die Zeitpunkte der letzten drei Flanken aus der aktuellen Position und der vorangehenden Position aus dem Ringspeicher 52 aus. Der Verarbeiter 53 ermittelt daraus die Einschaltdauer der Impulsfolge und einen rekonstruierten Wert der Hilfsspannung $U_0$ in folgender Weise: Die aktuelle Position enthält zu einem aktuellen Zeitpunkt $T_a$, wie oben beschrieben, die letzte fallende Flanke, beispielsweise zum Zeitpunkt T5, wie in den Figuren 4 und 5 gezeigt, und die dieser Flanke vorangehende steigende Flanke zum Zeitpunkt T4. Der Zeitpunkt T3 der vorletzten fallende Flanke ist in der Position des Ringspeichers 52 gespeichert, welche der aktuellen Position vorangeht. Die Einschaltdauer der Impulsfolge der Optokoppler-Ausgangsspannung $U_{opto}$ beträgt somit

$$DC_{Uopto} = \frac{T5 - T4}{T5 - T3}.$$

Entsprechend beträgt die Einschaltdauer der Impulsfolge des Optokoppler-Eingangsstroms $I_{opto}$

$$DC_{Iopto} = \frac{T4 - T3}{T5 - T3}.$$

Dadurch ist über die bekannte Beziehung gemäss Figur 2 der entsprechende Wert der Hilfsspannung $U_0$ bekannt. Die Einschaltdauer eines der Optokoppler-Signals und der ermittelte Wert der Hilfsspannung $U_0$ werden als Ausgangswerte 55 ausgegeben.

In einer bevorzugten Variante der Erfindung wird berücksichtigt, dass eine steigende Flanke der Optokoppler-Ausgangsspannung $U_{opto}$ relativ langsam verlaufen kann und dadurch zu einer Verzögerung der Detektion der Flanke führt, wie in den Figuren 4 und 5 angedeutet. Bei einer Kalibrierung der erfindungsgemässen Überwachungsvorrichtung wird diese Verzögerung gemessen. Für den Betrieb der Überwachungsvorrichtung wird in den oben gezeigten Formeln für die Einschaltdauer ein entsprechender Korrekturwert eingeführt.

Aus dem ermittelten Wert der Hilfsspannung $U_0$ wird durch Vergleich mit mindestens einem Schwellwert bestimmt, ob der Schalter 1 offen oder geschlossen ist: Falls der ermittelte Wert der Hilfsspannung $U_0$ über einen oberen Schwellwert steigt, wird der Schalter 1 als geschlossen betrachtet. Falls der ermittelte Wert der Hilfsspannung $U_0$ unter einen unteren Schwellwert sinkt, wird der Schalter 1 als offen betrachtet. Falls gar keine Impulsfolge vorliegt, wird der Schalter 1 ebenfalls als offen betrachtet. Ein entsprechendes Statussignal für die derart ermittelte Schalterstellung oder Schalterzustand wird als ein weiterer der Ausgangswerte 55 ausgegeben.

In einer bevorzugten Variante der Erfindung wird der Zeitpunkt der letzten fallenden Flanke dazu verwendet, zu Beginn einer Impulsfolge den Zeitpunkt der ersten Flanke zu bestimmen. Dieser Zeitpunkt entspricht dem Einschaltzeitpunkt des Schalters 1 und wird als einer der Ausgangswerte 55 ausgegeben. Eine genaue Kenntnis dieses Zeitpunkts ist in der Stationsleittechnik wichtig.

Falls die im Ringspeicher gespeicherten Zeitpunkte T2-T6 keine absoluten Zeiten sind, weist der Decodierer 5 vorteilhafterweise Mittel zur Bestimmung einer Zeitdifferenz zwischen einem aktuellen Zeitpunkt und einem Zustandswechsel der Impulsfolge auf. Damit wird beispielsweise durch einen Zähler eine Zeitdauer zwischen der letzten fallenden Flanke und der Abfrage des Ringspeichers zum aktuellen Zeitpunkt $T_a$ ermittelt. Aus einer bekannten absoluten Zeitinformation über den Abfragezeitpunkt $T_a$ ist somit auch der absolute Zeitpunkt der letzten fallenden Flanke bestimmbar.

In einer weiteren bevorzugten Variante der Erfindung wird auch eine Anzahl von Zustandsänderungen des Schalters 1 gezählt und als einer der Ausgangswerte 55 ausgegeben. Dadurch lässt sich eine Fehlfunktion in der Überwachungsvorrichtung detektieren, welche ständig Zustandsänderungen des Schalters 1 signalisiert, die in Wirklichkeit gar nicht derart häufig auftreten könnten.

Die oben beschriebenen Ausgangswerte 55 des Verarbeiters 53 und des Decodierers 5 werden beispielsweise in Ausgangsregister geschrieben. Diese Ausgangsregister werden zur weiteren Verarbeitung durch beispielsweise einen Mikroprozessor gelesen. Es ist aber auch möglich, dass der ASIC einen Zustandswechsel eines Schalters, zusammen mit einem entsprechenden Zeitstempel, in einen vorgegebenen Speicherbereich schreibt, um den Mikroprozessor von einer periodischen Analyse der Schalterzustände zu entlasten.

In einer weiteren Variante der Erfindung kombiniert der Decodierer 5 die Auswertung von Signalen von zwei Schaltern, welche Endschalter eines Leistungsschalters sind. Der Decodierer 5 ermittelt dabei, ob der Leistungsschalter eingeschaltet, ausgeschaltet, oder in einer Zwischenstellung ist.

Der erfindungsgemässe Decodierer 5 hat den Vorteil, dass er eine Decodierung des pulsdauermodulierten Signals erlaubt, auch wenn die Frequenz des Signals innerhalb vorgegebener Grenzen variiert. Eine Frequenz der pulsdauermodulierten Signale liegt beispielsweise zwischen 1 und 2 kHz. Sie variiert aufgrund herstellungsbedingter Toleranzen sowie aufgrund von Umgebungsbedingungen des Codierers 3, insbesondere einer Temperatur. Somit beträgt eine Einschaltdauer der Optokoppler-Ausgangsspannung $U_{opto}$, welche einer mittleren Hilfsspannung $U_0$ entspricht, ca. 700 Mikrosekunden. Die Frequenz, mit welcher der Verarbeiter 53 den Ringspeicher 52 abfragt, beträgt somit mindestens 2 kHz. Das heisst, dass höchstens alle 500 Mikrosekunden ein nächstes Wertepaar aus dem Ringspeicher gelesen und verarbeitet wird.

In einer bevorzugten Ausführungsform der Erfindung wird der Decodierer in einem speziell für die Decodierung ausgebildeten Baustein, insbesondere. in einem ASIC (Application Specific Integrated Circuit) oder FPGA (Field Programmable Gate Array) ausgeführt.

In einer bevorzugten Variante der Erfindung verarbeitet der ASIC mehrere, beispielsweise 16 oder 24 oder mehr Signale respektive Impulsfolgen, das heisst, dass der Signaleingang 54 aus 16 respektive 24 parallelen Signalen besteht Dabei werden die einzelnen Signale zyklisch abgetastet und verarbeitet, so dass die gleiche Hardware des ASICs reihum zur Verarbeitung der mehreren Signale oder Kanäle verwendet wird. Jedem Kanal ist dabei ein eigener Ringspeicher und sind eigene Parameter wie Schwellwerte zugeordnet. Diese sind in einem eigenen RAM-Bereich gespeichert und werden zu Beginn einer Abarbeitung eines Kanals in den ASIC geladen. Falls beispielsweise 24 Signale verarbeitet werden, und jedes Signal alle 500 Mikrosekunden verarbeitet wird, so wird alle 500/24 Mikrosekunden, also ca. alle 20.8 Mikrosekunden das nächste Signal verarbeitet. Mit der gegenwärtigen Technologie beträgt eine Verarbeitungszeit des Verarbeiters 53 für einen Kanal ca. 10 Mikrosekunden.

Figur 7 zeigt ein Flussdiagramm eines Arbeitsablaufs des Signalerfassers 51: In Block 71 wird der Signaleingang, welcher beispielsweise die Optokoppler-Ausgangsspannung $U_{opto}$ aufweist, abgetastet. Im Entscheidungsblock 72 wird der abgetastete Wert mit mindestens einem gespeicherten vorangegangenen abgetasteten Wert verglichen. Falls der Vergleich nicht auf eine Zustandsänderung des Signals schliessen lässt, wird mit Block 76 weitergefahren. Falls der Vergleich eine steigende Flanke ergibt, wird in Block 73 der Zeitpunkt der steigenden Flanke bestimmt und in das entsprechende Register der aktuellen Position des Ringspeichers 52 geschrieben, und dann mit Block 76 weitergefahren. Falls der Vergleich im Entscheidungsblock 72 eine fallende Flanke ergibt, wird in Block 74 der Zeitpunkt der fallenden Flanke bestimmt und in das entsprechende Register der aktuellen Position des Ringspeichers 52 geschrieben, und dann mit Block 75 weitergefahren. In Block 75 wird der Ringzähler auf die nächste Position gesetzt und dann mit Block 76 weitergefahren. Bei Block 76 wird der abgetastete Wert gespeichert und anschliessend zu Block 71 zurückgekehrt.

Figur 8 zeigt ein Flussdiagramm eines Arbeitsablaufs des Verarbeiters 53: In Block 81 werden die Parameter des aktuellen Kanals geladen. Im darauffolgenden Block 82 werden die letzten drei Flanken aus dem Ringspeicher 52 gelesen. Im darauffolgenden Entscheidungsblock 83 werden diese Flanken mit gespeicherten Werten des letzten Verarbeitungszyklus verglichen. Falls seit dem letzten Zyklus keine neue fallende Flanke detektiert worden ist, wird mit Block 87 weitergefahren. Falls eine neue fallende Flanke vorliegt, wird in Block 84 wie oben beschrieben ein Wert der Hilfsspannung $U_0$ ermittelt. Im darauffolgenden Block 85 wird der Zustand des Schalters 1 bestimmt, wobei optional eine Entprellung durchgeführt wird. Die Entprellung geschieht, indem eine Zustandsänderung des Schalters 1 während einer vorgegebenen Zeit, beispielsweise während annähernd einer bis annähernd 32 Millisekunden stabil bleiben muss, bevor die Zustandsänderung ausgegeben wird. Im darauffolgenden Block 86 werden die ermittelten Ausgangswerte 55 in die Ausgangsregister geschrieben, wobei die Ausgangsregister dem aktuellen Kanal zugeordnet sind. Im Block 87 werden aktuelle Parameter des Kanals gespeichert und anschliessend zu Block 81 zurückgekehrt.

**Bezugszeichenliste**

| | |
|---|---|
| 1 | Schalter |
| 2 | Hilfsspannungsquelle |
| 3 | Codierer |
| 4 | Übertragungsmittel |
| 5 | Decodierer |
| 51 | Signalerfasser |
| 52 | Ringspeicher |
| 53 | Verarbeiter |
| 54 | Signaleingang |
| 55 | Ausgangswerte |
| DC | Einschaltdauer |
| $DC_{min}$ | minimale Einschaltdauer |
| $I_{opto}$ | Optokoppler-Eingangsstrom |
| R | Widerstand |
| T2-T6 | Zeitpunkte von Zustandswechseln resp. Signalflanken |
| $T_{on}$ | Einschaltzeitpunkt |
| $T_a$ | Aktueller Zeitpunkt |
| $U_0$ | Hilfsspannung |
| $U_{max}$ | maximale Spannung |
| $U_{opto}$ | Optokoppler-Ausgangsspannung |
| $V_D$ | Versorgungsspannung |

**Patentansprüche**

1. Vorrichtung zur Überwachung einer Schalterstellung eines Schalters 1, der mit einer Hilfsspannungsquelle (2) verbunden ist, wobei

   die Vorrichtung einen Codierer (3), ein Übertragungsmittel (4) und einen Decodierer (5) aufweist,
   bei geschlossenem Schalter (1) eine Hilfsspannung $U_0$ der Hilfsspannungsquelle (2) am Codierer (3) anliegt und den Codierer (3) mit Energie versorgt,
   der Codierer (3) zur Erzeugung einer pulsdauermodulierten Impulsfolge ausgebildet ist, wobei eine Einschaltdauer der Impulsfolge eine Funktion der Hilfsspannung $U_0$ ist,
   das Übertragungsmittel (4) zur Übertragung der pulsdauermodulierten Impulsfolge an den Decodierer (5) ausgebildet ist,

   **dadurch gekennzeichnet, dass** der Decodierer (5) zur Auswertung der pulsdauermodulierten Impulsfolge und zur Bestimmung eines rekonstruierten Wertes der Hilfsspannung $U_0$ in einem speziell für die Decodierung ausgebildeten Baustein implementiert ist.

2. Vorrichtung gemäss Anspruch 1, **dadurch gekennzeichnet, dass** der Decodierer (5) in einem ASIC implementiert ist.

3. Vorrichtung gemäss Anspruch 1, **dadurch gekennzeichnet, dass** der Decodierer (5) zur Auswertung der pulsdauermodulierten Impulsfolge und zur Bestimmung eines rekonstruierten Wertes der Hilfsspannung $U_0$

   a) einen Signalerfasser (51) zur Abtastung der Impulsfolge, zur Detektion von Zustandswechseln der Impulsfolge und zur Bestimmung von Zeitpunkten, zu denen Zustandswechsel detektiert wurden,
   b) einen Ringspeicher (52) zur Speicherung dieser Zeitpunkte von Zustandswechseln, und
   c) einen Verarbeiter (53) zur Bestimmung der Einschaltdauer der Impulsfolge und zur Bestimmung eines rekonstruierten Wertes der Hilfsspannung $U_0$

   aufweist.

4. Vorrichtung gemäss Anspruch 1, **dadurch gekennzeichnet, dass** der Decodierer (5) Mittel zur Ermittlung einer Schalterstellung des Schalters (1) aufweist.

5. Vorrichtung gemäss Anspruch 2, **dadurch gekenn-**

**zeichnet, dass** der Decodierer (5) Mittel zur Bestimmung eines Einschaltzeitpunkts des Schalters (1) aufweist.

6. Vorrichtung gemäss Anspruch 2, **dadurch gekennzeichnet, dass** der Decodierer (5) Mittel zur Entprellung der ermittelten Schalterstellung aufweist.

7. Vorrichtung gemäss Anspruch 2, **dadurch gekennzeichnet, dass** der Decodierer (5) Mittel zum Zählen einer Anzahl von Zustandsänderungen des Schalters (1) aufweist.

8. Verfahren zur Überwachung einer Schalterstellung eines Schalters (1), wobei eine Hilfsspannungsquelle (2) einen Codierer (3) über den Schalter (1) mit elektrischer Energie versorgt, und der Codierer (3) bei geschlossenem Schalter (1) eine pulsdauermodulierte Impulsfolge erzeugt, wobei eine Einschaltdauer der Impulsfolge nach Massgabe einer Hilfsspannung $U_0$ der Hilfsspannungsquelle (2) bestimmt wird,
**dadurch gekennzeichnet, dass** ein Decodierer (5) zur Auswertung der pulsdauermodulierten Impulsfolge und zur Bestimmung eines rekonstruierten Wertes der Hilfsspannung $U_0$ in einem speziell für die Decodierung ausgebildeten Baustein implementiert ausgeführt wird.

9. Verfahren gemäss Anspruch 8, **dadurch gekennzeichnet, dass** die Auswertung der pulsdauermodulierten Impulsfolge durch den Decodierer (5) geschieht, indem

   a) ein Signalerfasser (51) die Impulsfolge abtastet, Zustandswechsel der Impulsfolge detektiert und Zeitpunkte, zu denen Zustandswechsel detektiert wurden, in einen Ringspeicher (52) schreibt,
   b) ein Verarbeiter (53) diese Zeitpunkte aus dem Ringspeicher (52) ausliest, und daraus die Einschaltdauer der Impulsfolge und einen rekonstruierten Wert der Hilfsspannung $U_0$ bestimmt.

10. Verfahren gemäss Anspruch 8, **dadurch gekennzeichnet, dass** der Decodierer (5) eine Schalterstellung des Schalters (1) ermittelt.

11. Verfahren gemäss Anspruch 8, **dadurch gekennzeichnet, dass** der Decodierer (5) einen Einschaltzeitpunkt des Schalters (1) ermittelt.

12. Verfahren gemäss Anspruch 8, **dadurch gekennzeichnet, dass** der Decodierer (5) Signale von mehreren Schaltern (1) abtastet und verarbeitet.

Fig. 1

Fig. 2

Fig. 3

Fig. 4

Fig. 5

**Fig. 6**

**Fig. 7**

**Fig. 8**

Europäisches
Patentamt

**EUROPÄISCHER RECHERCHENBERICHT**

Nummer der Anmeldung

EP 00 81 0256

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | US 5 585 678 A (DIJK RON  ET AL) 17. Dezember 1996 (1996-12-17) * Zusammenfassung; Abbildungen 1-5 * ----- | 1,8 | H01H9/16 H02J13/00 |
| | | | RECHERCHIERTE SACHGEBIETE (Int.Cl.7) |
| | | | H01H H02J H02H H03K |

Der vorliegende Recherchenbericht wurde für alle Patentansprüche erstellt

| Recherchenort | Abschlußdatum der Recherche | Prüfer |
|---|---|---|
| DEN HAAG | 3. August 2000 | Salm, R |

## ANHANG ZUM EUROPÄISCHEN RECHERCHENBERICHT
## ÜBER DIE EUROPÄISCHE PATENTANMELDUNG NR.

EP 00 81 0256

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2000

| Im Recherchenbericht angeführtes Patentdokument | Datum der Veröffentlichung | Mitglied(er) der Patentfamilie | Datum der Veröffentlichung |
|---|---|---|---|
| US 5585678 A | 17-12-1996 | DE 4318189 A<br>AT 160908 T<br>DE 59404707 D<br>EP 0631360 A<br>JP 7015894 A | 08-12-1994<br>15-12-1997<br>15-01-1998<br>28-12-1994<br>17-01-1995 |

EPO FORM P0461

Für nähere Einzelheiten zu diesem Anhang : siehe Amtsblatt des Europäischen Patentamts, Nr.12/82